# EUROPEAN PATENT SPECIFICATION

(11) **EP 2 446 584 B1**
(45) Date of publication and mention of the grant of the patent: **10.02.2016**
(21) Application number: 09779923.3
(22) Date of filing: 24.06.2009
(51) Int. Cl.: H04L 12/24

(54) **METHOD AND SYSTEM FOR USE IN NETWORK MANAGEMENT OF COMMUNICATIONS NETWORK**
VERFAHREN UND SYSTEM ZUR VERWENDUNG BEI DER NETZVERWALTUNG EINES KOMMUNIKATIONSNETZES.
PROCÉDÉ ET SYSTÈME DESTINÉS À ÊTRE UTILISÉS DANS LA GESTION DE RÉSEAU D'UN RÉSEAU DE COMMUNICATION

(43) Date of publication of application: 02.05.2012
(73) Proprietor: Telefonaktiebolaget L M Ericsson (PUBL), 164 83 Stockholm (SE)
(72) Inventor: MILENOVIC, Aleksandar, Athlone Co. Roscommon (IE)
(74) Representative: Stasiewski, Piotr Grzegorz
(86) International application number: PCT/EP2009/057893
(87) International publication number: WO 2010/149211

(56) References cited:
- EP-A- 2 053 790
- US-A1- 2002 099 821
- US-A1- 2006 072 541
- US-A1- 2007 276 936
- "Telecommunications management; Home Node B (HNB) Operations, Administration, Maintenance and Provisioning (OAM&P); Procedure flows for Type 1 interface HNB to HNB Management System (HMS)"[Online] 12 June 2009 (2009-06-12), XP002560403 Retrieved from the Internet: URL:http://www.3gpp.org/ftp/Specs/html-inf o/32583.htm> [retrieved on 2009-12-09]
- "Telecommunication management; Configuration Management (CM); Part 5: Basic CM Integration Reference Point (IRP): Information model (including Network Resource Model (NRM)"[Online] 3 July 2001 (2001-07-03), XP002560404 Retrieved from the Internet: URL:http://www.3gpp.org/ftp/Specs/html-inf o/32106-5.htm> [retrieved on 2009-12-09]

## Description

### Technical Field

The present invention relates to communications networks, in general, and in particular to managing integration of components in a communications network including changing relations between managed systems and management systems in the communications network.

### Background

In the market of network management systems, there are different products targeting different levels of management: Element, Domain, Network, Service, Customer Relation, etc. Being separated by above listed levels, each of such products is developed, tested and maintained separately. From network operator's perspective, they have to pay more for separate products they need, which results in increased overall cost of the network management system. The operators also have to pay independent software vendors to integrate these products.

There are known solutions for network management, for example Web Service Distributed Management (WSDM). This standard specifies how Manageable Resources can be managed by Manageability Consumers (e.g. Management Systems) - using Web services.

Another known solution is defined in 3GPP Integration Reference Points (IRP). IRP Manager is similar concept to Manageability Consumer as described above. IRP Agents are also similar concept to Manageable Resources. They can represent either Network Elements or mediating system like OSS (Operational Support System).

There is known a document related to management of operations of communications network, namely US2006/072541. However, operations as in the invention now to be described are neither disclosed nor suggested in any of the known solutions.

### Summary

It is the object of the present invention to provide an improved management of integration of components in a communications network.

According to a first aspect of the present invention there is provided a method for management of integration of a system in a communications network comprising a plurality of systems. The method comprises generating a first message by a first system, wherein said first message comprises a request of said first system to be managed and information describing requirements of said first system. The method also comprises sending the first message to other systems of the network and waiting by the first system for a first predefined period of time for receiving replies from other systems in the network. Furthermore, the method comprises receiving at least one reply from at least one of the systems of the network in response to said first message to confirm that said first system is managed by the at least one system sending said reply, said reply containing information about capabilities of the at least one system sending said reply. If said first system received within said first predefined period of time more than one reply the method comprises selecting by the first system a system to be a management system for the first system based on the received the replies and sending a third message to the remaining systems that have not been selected, in which the first system requests to stop being managed by the not selected systems. The method further comprises sending a second message to said selected system, if a network resource model of the first system changed, wherein said second message comprises information describing changed requirements of said first system.

According to a second aspect of the present invention there is provided a system for use in a communications network comprising a processing module adapted to generate a first message comprising a request of said system to be managed and information describing requirements of said system and to send said first message to other systems of the network. The system further comprises a first timer for measuring a first predefined period of time for waiting for replies from other systems in the network, wherein the processing module is further adapted to receive at least one reply from at least one of the systems of the network in response to said first message to confirm that said system is managed by the at least one system sending said reply. The received reply contains information about capabilities of the at least one system sending said reply. The processing module, if said first system received within said first predefined period of time more than one reply, is further adapted to select a system to be a management system for the first system based on information about capabilities received in the replies and send a third message to the remaining systems that have not been selected, in which the first system requests to stop being managed by the not selected systems. The processing module is further adapted to send a second message to the second system, if a network resource model of the system changed, wherein said second message comprises information describing the changed requirements of said system.

Further features of the present invention are as claimed in the dependent claims.

The present invention provides at least the following benefits:
- one unified architecture across managed and management systems of the network;
- support for auto-integration;
- effective handling of changes in network resource models of the systems of the network.

### Brief description of the drawings

The present invention will be understood and appreciated more fully from the following detailed description taken in conjunction with the drawings in which:
FIG. 1 is a diagram illustrating exchange of messages in a method for management of integration of components in a communications network in one embodiment of the present invention;
FIG. 2 to FIG. 5 are diagrams illustrating the method for management of integration of components in a communications network in various embodiments of the present invention;
FIG. 6 is a diagram illustrating deployment of auto-integration management protocol on different level of network management;
FIG. 7 is a diagram illustrating a communications network comprising systems in one embodiment of the present invention;
FIG. 8 is a diagram illustrating state machine for managed system in one embodiment of the present invention;
FIG. 9 is a diagram illustrating state machine for management system in one embodiment of the present invention;
FIG. 10 is a message sequence chart illustrating operation of the method in one embodiment of the present invention;
FIG. 11 is a message sequence chart illustrating operation of the method in one embodiment of the present invention;
FIG. 12 is a diagram illustrating a basic meta model for use in the method for management of integration of components in a communications network in one embodiment of the present invention;
FIG. 13 is a diagram illustrating extensions of the basic meta model presented in Fig. 12.

### Detailed description

In the following description the terms managed system and management system are used based on relation between two systems. System A is a managed system if for its operation it requires another system B that provides management functions to said managed system - system B is a management system. The same system A may be a management system for system C. Whether a system is management or managed, or both depends on said system's capabilities and requirements of other systems in the network.

Embodiments of the present invention use an example of a home eNodeB being installed at a user's home. It is, however, only one non-limiting example and the present invention in its many embodiments is equally applicable to many other types of network elements.

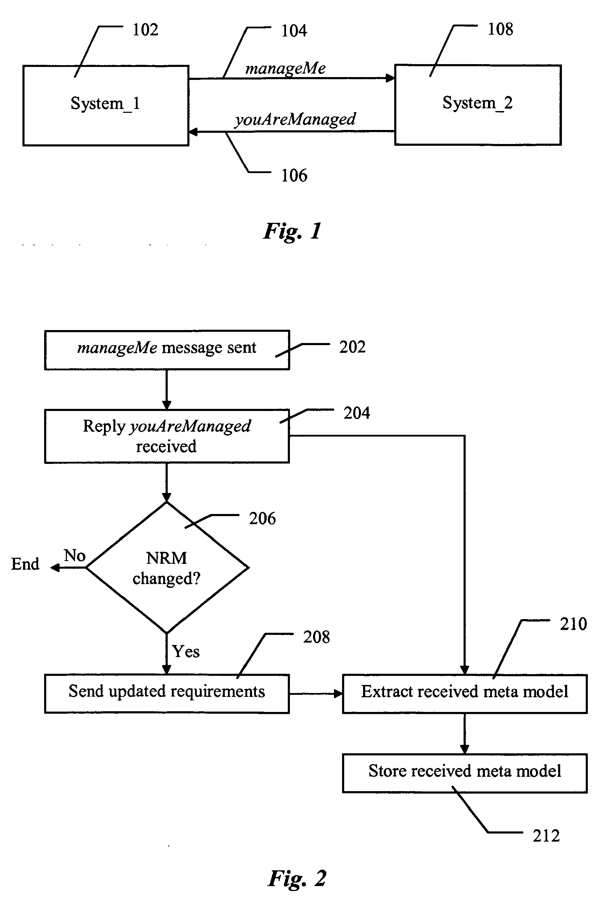

With reference to Fig. 1 and Fig. 2 an auto-integration management protocol implementing the method in one embodiment of the present invention is presented. When a new system is added to a communications network it needs to be configured and located in appropriate place in said network hierarchy. It will be especially important with the introduction of home base stations also known as home eNodeBs, which will be part of the communications network run by the network operator, but installed at homes of the end users. This makes the task of managing the network a big challenge due to the number of the home base stations and the fact that they will be supplied by different vendors.

The method implemented in this protocol is based on exchanging messages and replies and processing information contained in the messages. When a home eNodeB 102 is for the first time switched on in the network it broadcasts 202 a first message, 104, of the protocol - *manageMe* message. This message is received by other systems in this communications network and said systems, if they are capable of managing the home eNodeB 102, reply 204 with *youAreManaged* message, 106. By receiving the reply the relation between said home eNodeB 102 and the management system 108 that sent the reply message 106 is defined and the home eNodeB 102 is placed in the hierarchy of the network 100.

The *manageMe* message 104 in addition to being a request to be managed sent by the home eNodeB 102 contains in one embodiment also a meta model defining the requirements of the home eNodeB 102. In a preferred embodiment the meta model is generated from a Network Resource Model (NRM) of the home eNodeB 102. The NRM of the managed system 102 may change from time to time, for example as a result of software or hardware upgrade. If this happens the management system must be notified about the changes in order to effectively manage the home eNodeB 102. To enable that, if the NRM of the home eNodeB 102 changes, 206, it sends 208 a second message, *modelChanged,* to the management system 108 comprising information describing the changed requirements of said home eNodeB 102. The information is preferably in the form of a meta model produced based on the changed NRM. Alternatively the information is sent in the form of the NRM model.

In an alternative embodiment the step of sending information describing the changed requirements of said managed system is realised by sending *manageMe* message, which comprises a request of home eNodeB and information describing requirements of said managed system. In this situation the information representing requirements of the home eNodeB is the updated information.

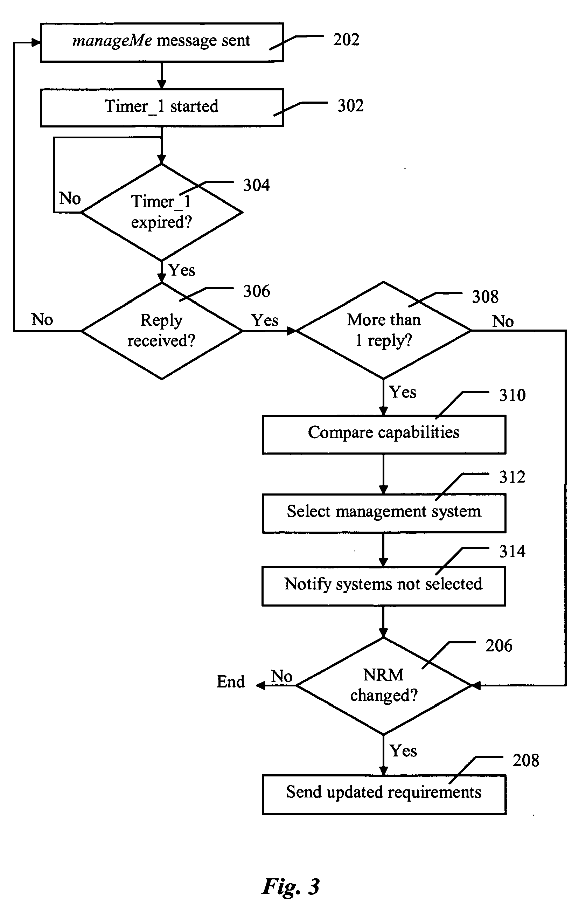

Preferably, as illustrated in Fig. 3, the managed system (the home eNodeB that wants to be managed) starts a first timer 302 and until the first timer expires 304 the home eNodeB waits for replies from other systems in the network that can be management systems for this home eNodeB.

If the home eNodeB 102 receives during the predefined period of time, as measured by the first timer, more than one reply 306, 308 the replies are analysed 310. In the *youAreManaged* message each candidate management system includes information about its capabilities in the form of meta model or NRM of this management system. As mentioned earlier, in a preferred embodiment the meta model is generated from the NRM, however other known ways of generating meta models can also be used in alternative embodiments of the present invention. As a result of that the home eNodeB has information about a set of candidate management systems and analyses said candidates by comparing 310 their capabilities to select 312 the system having the best capabilities. Once the management system is selected to manage the home eNodeB 102 it is necessary to release from the task of managing the home eNodeB 102 the other systems of the network that have sent the *youAreManaged* replies. In order to do that the home eNodeB 102 sends 314 a message called *stopManageMe* to those management systems that replied to its *manageMe* message, but have not been selected.

In an alternative embodiment, however, the home eNodeB accepts the first received reply message 204 and its management system is the system that has sent the first reply. In this situation, if there are any other *youAreManaged* messages received the home eNodeB 102 automatically replies by sending the *stopManageMe* messages.

It may be that the home eNodeB 102 does not receive any *youAreManaged* reply before expiry of the first timer 304. In this situation the method is re-started and the *manageMe* message is broadcast once again 306, 202.

In one embodiment the management system is a domain manager and in an alternative embodiment an Operational Support System (OSS) is the management system.

There may be changes in the network, for example new systems may be added or the existing systems may have their Network Resource Models upgraded. In consequence capabilities and requirements of the systems of the network may also change. It may be that as a result of these changes another system in the network better meets the requirements of the home eNodeB than the current management system. To ensure that the configuration is optimised the home eNodeB 102 starts a second timer 402 after deciding which system will be its management system and upon expiry of this second timer 404 the whole process of selecting a management system is repeated by sending the *manageMe* message 202. This approach ensures that the configuration is refreshed periodically in order to optimise management operations. In alternative embodiments the second timer may be started in another point of the cycle, for example it can be started simultaneously with the first timer.

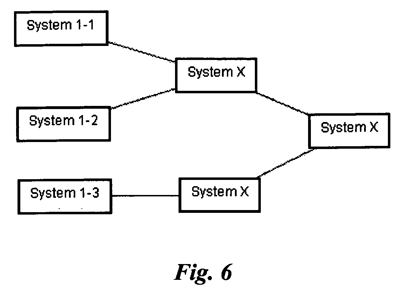

One of the benefits of the auto-integration management protocol is that the software that implements the auto-integration management protocol will be developed only once and deployed (installed) on different levels of management thus reducing development costs and further reducing prices for customers. The example is illustrated in Fig. 6, with System X.

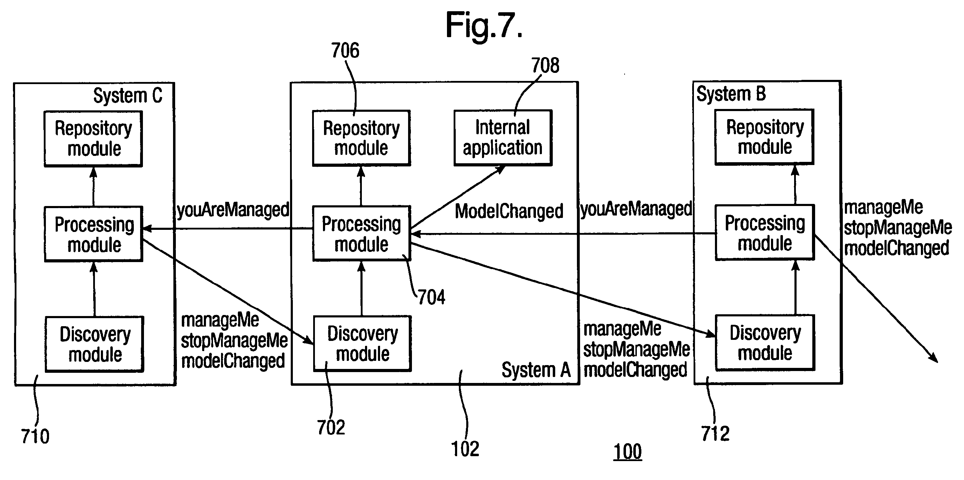

To achieve this behaviour of the systems in the network, certain architectural style and conceptual components are introduced as shown in Fig. 7 illustrating a network implementing systems in accordance with one embodiment of the present invention.

Discovery module 702 - this component listens to incoming *manageMe, stopManageMe* and *modelChanged* messages that are sent by other systems. In Figure 7, System C, 710, is sending such message and System A, home eNodeB102, is receiveing that message. Discovery module will then forward these messages to a processing module 704.

Processing module 704 this component processes *manageMe, stopManageMe* and *modelChanged* messages. For the *manageMe* and *modelChanged* messages, it extracts a meta model from the message. Then it checks a repository module 706 with its own capabilities to see whether it is capable to manage the caller system. If so, it generates and sends the *youAreManaged* message, and updates the repository module 706. Whenever model is added, removed or changed it generates a message to inform listeners. The listeners can be other systems that manage this one, but also internal application 708 components. In Fig. 7, System B 712 and Internal Application 708 are notified of a model change of System A 102.

Repository module 706 - this component stores meta models (capabilities and requirements) and actual models (i.e. Network Resource Models) from all managed systems and its own. It allows for search and query across all models in repository. In a simple embodiment a system stores only its own meta model or NRM in the repository.

A simplified example of a meta model for a home eNodeB is presented below:
*Class AlarmType type= "CELL_DOWN" severity= "MAJOR" targetType=Cell*
*Class AlarmType type=*"*POWER_LOW*" *severity="CRITICAL" targetType=Power class*
*Class Cell attribute="scramblingCode", attribute="locationArea". Cell extends MO class*

A simplified example of a Network Resource Model for a home eNodeB is presented below:
*Instance Alarm id=1, type="CELL_DOWN" target=Cell-1*
*Instance Alarm id=2, type= "CELL_DOWN" target=Cell-2*
*Instance Cell id=Cell-1 scramblingCode=22, locationArea=1*
*Instance Cell id=Cell-2 scramblingCode=22, locationArea=2*
*Instance Cell id=Cell-3 scramblingCode=23, locationArea=1*
*Instance Cell id=Cell-4 scramblingCode=23, locationArea=2*

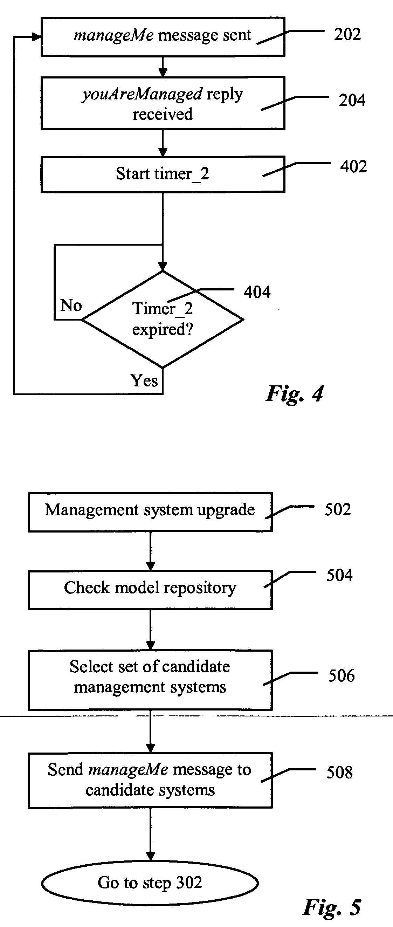

With reference to Fig. 2 and Fig. 5 a further improvement of the embodiment of the present invention is presented. When a home eNodeB or its management system receives a message 202, 204, 208 comprising a meta model of another system in the network (e.g. *manageMe, youAreManaged* or *modelChanged* messages) a processing unit 702 of the home eNodeB 102 extracts 210 the meta model and stores 212 it in the repository module 706. In this way the home eNodeB 102 has information about requirements and capabilities of other systems in the network. Having this information readily available, if the home eNodeB wants to upgrade 502 its management system (i.e. switch to one with a better capabilities), it sends the *manageMe* message to a set of selected management systems. The processing unit 704 of the home eNodeB 102 carries out an analysis 504 of capabilities of management systems stored in the repository 706 of the home eNodeB 102 and selects 506 a group of systems with capabilities matching requirements of the home eNodeB. The *manageMe* message is sent 508 to the selected candidate management systems. Replies to this *manageMe* message are processed as discussed for example in embodiment illustrated in Fig. 3. In this way the amount of management traffic is reduced and additionally the systems that do not have required capabilities are not involved in processing meta models where there is no chance of being selected for managing the home eNodeB.

When a management system receives the *manageMe* message it checks if it can manage the home eNodeB which has sent this message. The management system processes the meta model received from the home eNodeB. It examines the home eNodeB's requirements represented in the meta model and its own model containing information about what management information it is able to process. If the management system is able to manage the home eNodeB (i.e. if the capabilities of the management system match or are better than the requirements of the home eNodeB), it sends the *youAreManaged* message with its meta model and allocated System ID. The home eNodeB will use this ID for further communication with the management system.

As it is illustrated in Fig. 7 the same architecture is applied to managed and management systems, allowing full protocol deployment.

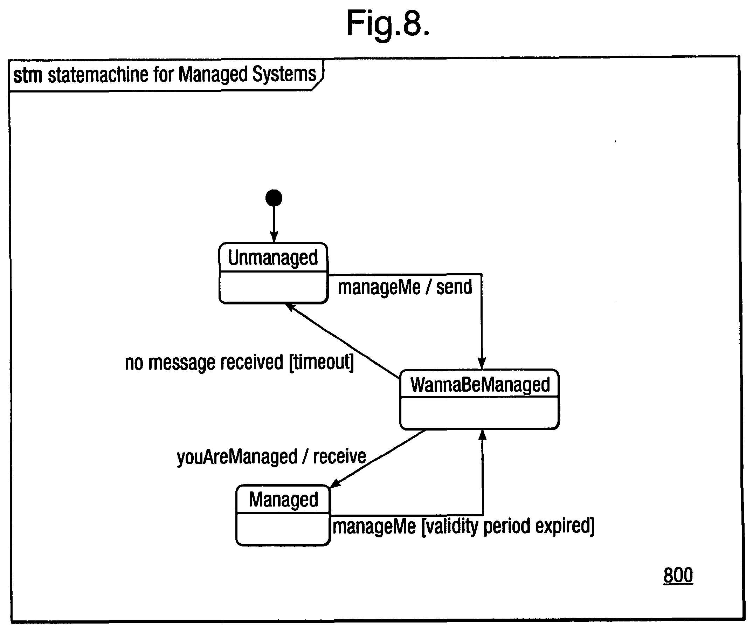

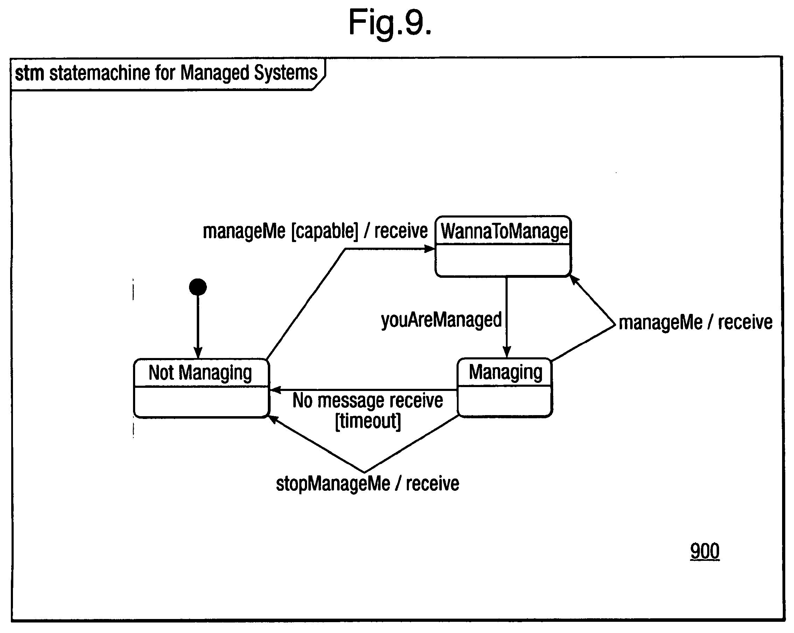

In a preferred embodiment a system that implements this protocol adheres to at least two state machines: one for a system being managed 800 - Fig. 8 and one for a management system 900 - Fig. 9. It is worth to note that there will be systems that implement both state machines as this is the way to stack systems in a hierarchy.

As shown in Fig. 8 the state machine 800 for a managed system handles one message at a time and per model stored in repository module, and all message processing by this state machine is time bound. For every *manageMe* message sent, *youAreManaged* message must be received within specified timeout (the first timer), which is a configuration parameter.

As shown in Fig. 9, because the managed system initiates management session with the *manageMe* message, it needs to verify whether the management system is still available. Therefore, as shown in the diagram of the state machine for management system 900, the managed system sends another *manageMe* message after specified validity period. The management system moves into *WannaToManage* state and will need to send back another *youAreManaged* message.

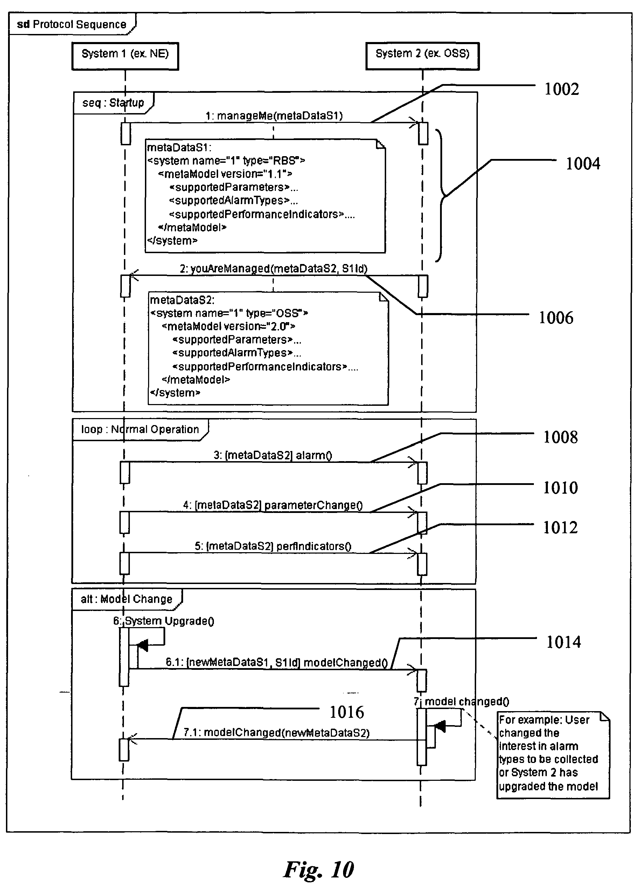

As an alternative or additional explanation of the auto-integration protocol according to one embodiment of the present invention the sequence diagram presented in Fig. 10 is discussed below.
1. System 1, for example a home eNodeB, sends the *manageMe* message 1002 to everyone with meta model containing System 1 capabilities with respect to Alarm types, configuration parameters available and Performance Indicators supported. After sending this message, System 1 waits for a reply of management systems within configurable time period. If no message is received, it will repeat step 1.
2. System 2, for example Operational Support System (OSS), processes 1004 received meta model from System 1. System 2 examines System 1 requirements represented in meta model. If System 2 is able to manage System 1, it sends the *youAreManaged* message 1006 with its meta model (metaDataS2) and allocated system ID (S1Id). System 1 will use this system ID for further communication with System 2. It can then alter DB Schemas (i.e. description of a database comprising SQL, Structured Query Language, tables and columns that maps onto NRM), create different notification channels, etc.
3. This is part of normal operation. System 1 sends alarms 1008 to System 2, but only with types specified in metaDataS2.
4. Same as step 3, but applied for configuration parameter change 1010.
5. Same as step 3, but applied for performance indicators collection 1012.
6. When System 1 gets upgraded, it typically changes its requirements and thus Meta Model changes too, as a consequence of that *modedChanged* message is sent 1014 from System 1 to System 2.
7. Same as in step 6, but when meta model of System 2 changed 1016.

Auto-integration protocol is meta model driven based on XML that can be parsed and transformed easily. The protocol doesn't specify the transportation mechanism between Systems (CORBA, SOAP, TCP, etc) - it can be applied to any of them.

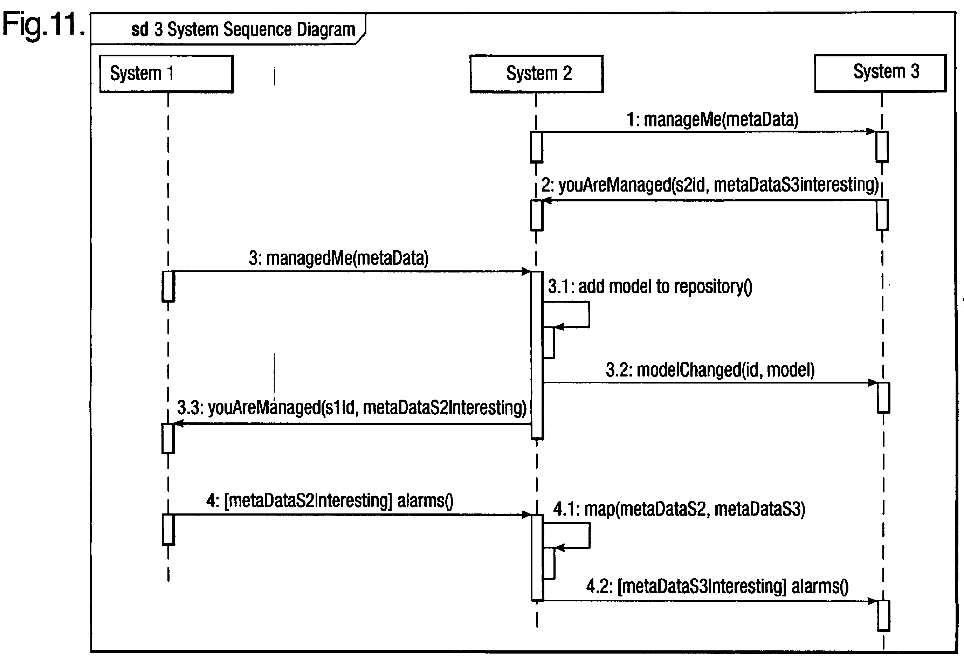

As it was explained earlier the same protocol embodying the present invention can be implemented at different levels of the network and in different systems of the network. An example showing that is illustrated in Fig. 11. Applying same protocol results in same integration between Systems 1, 2 and 3. The difference between System 1 and 2 is that System 2 does meta model aggregation and can handle more than one system.

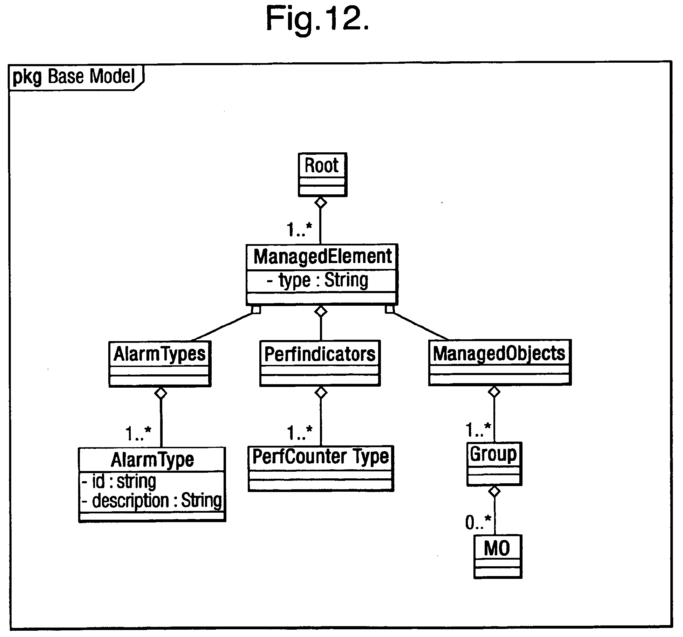

In order for the embodiments of the present invention to operate properly when implemented the meta model must be structured in a way that it can be interpreted. As a part of the protocol, a basic meta model is specified in Fig. 12. This is just one example of the meta model that can be used in embodiments of the present invention. The *Root* represents a starting point in the hierarchy. It owns one or more *ManagedElement* instances. *ManagedElement* is an entity that is managed by a management system. *ManagedElement* can generate alarms of different *AlarmType* and performance indicators (counters and statistics) *PerfIndicators* and can also be configured via parameters (attributes) contained under Managed Objects (MOs) *ManagedObjects.* Those MOs can be grouped into logical groups.

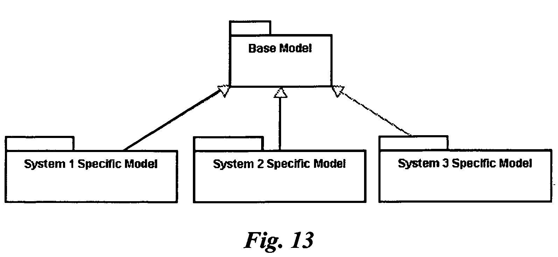

The basic meta model can be extended to include specific features of different systems in the network. In a very simplistic way the extension of the basic meta model is illustrated in Fig. 13.

Although the embodiments discussed earlier disclosed sending a meta model in various messages (*manageMe, youAreManaged, modelChanged*) it is also possible in alternative embodiments to send a Network Resource Model as information about requirements and/or capabilities of a system.

In various embodiments of the present invention both the meta model and the NRM can be represented in XML format and transported as part of the messages exchanged between the systems (e.g. as part of the *manageMe* message). In order to implement that, in one embodiment, the managed system (or management system) converts its meta model or NRM into XML format and sends the XML representation in a message to other systems. The conversion is performed by the processing module 704 or by other processor.

Fig. 7 illustrates a system 102, 710 and 712 for use in a communications network 100 in accordance with one embodiment of the present invention. The system 102 comprises a discovery module 702, a processing module 704 and a repository module 706. The discovery module 702 listens to incoming messages from other systems 710, 712 in said network and forwards an incoming message to a processing module 704 if it is one of *manageMe* or *stopManageMe,* or *modelChanged* messages. Said processing module 704, which in one embodiment is a processor, processes said message and generates a reply in response to a request to be managed. The processing module 704 also generates a *manageMe* message and sends it to other systems 712 of the network 100. The repository module 706 is for storing information about capabilities and requirements of other systems 710, 712 in the network. The systems 102, 710 and 712 use their repository modules also for storing information about their own capabilities and requirements. The information stored in the repository module can be stored in one embodiment in the form of network resource models, meta models or in other form, or it may be a combination of different formats used for storing said information.

In one embodiment the system 102 comprises a first timer. Said first timer is used to measure a first predefined period of time in which the system (managed system) waits for replies from management systems. If said managed system received within said first predefined period of time more than one reply the processing module 702 selects a management system based on the received replies and sends *stopManageMe* message to the remaining management systems requesting to stop being managed by the not selected management systems.

In yet another embodiment the system 102 comprises a second timer, which is used for determining time intervals between consecutive events of generating and sending the *manageMe* messages.

The present invention is not limited to the specific embodiments described in the above description, but it can be varied in a number of ways within the scope of the claims.

## Claims

1. A method for management of integration of a system in a communications network comprising a plurality of systems, the method comprising the steps of:
- generating a first message by a first system comprising a request of said first system to be managed and information describing requirements of said first system;
- sending the first message (202) to other systems of the network;
- waiting (302, 304) by the first system for a first predefined period of time for receiving replies from other systems in the network;
- receiving at least one reply (204) from at least one of the systems of the network in response to said first message to confirm that said first system is managed by the at least one system sending said reply, said reply containing information about capabilities of the at least one system sending said reply, wherein if said first system received within said first predefined period of time more than one reply (308) the method comprises:
- selecting (312) by the first system a system to be a management system for the first system based on the received the replies;
- sending a third message (314) to the remaining systems that have not been selected, in which the first system requests to stop being managed by the not selected systems; and
- sending a second message (208) to said selected system, if a network resource model of the first system changed (206), wherein said second message comprises information describing changed requirements of said first system.

2. The method according to claim 1, comprising repeating the step of sending the first message if no reply has been received (306) within said predefined period of time.

3. The method according to claim 1, wherein sending the first message is initiated internally within the first system by connecting the first system to the network.

4. The method according to any one of preceding claims, wherein the first system sends to the management system of said first system information related to ongoing management (1008 - 1012) of the type specified in the capabilities received by the first system in the reply message from the management system.

5. The method according to any one of the preceding claims, wherein the steps of sending information about capabilities and/or requirements of a system comprise sending a meta model generated from the network resource model of the system sending said information.

6. The method according to any one of claims 1 - 4, wherein the steps of sending information about capabilities and/or requirements of a system comprise sending the network resource model of the system sending said information.

7. The method according to any one of the preceding claims, wherein the steps of sending information about capabilities and/or requirements of a system comprise sending an XML representation of the meta model or the Network Resource Model.

8. A system (102) for use in a communications network (100) comprising a processing module (704) adapted to:
- generate a first message comprising a request of said system to be managed and information describing requirements of said system;
- send said first message to other systems of the network;
the system further comprising a first timer for measuring a first predefined period of time for waiting for replies from other systems in the network, wherein the processing module is further adapted to:
- receive at least one reply from at least one of the systems of the network in response to said first message to confirm that said system is managed by the at least one system sending said reply, said reply containing information about capabilities of the at least one system sending said reply;
wherein the processing module, if said first system received within said first predefined period of time more than one reply, is further adapted to:
- select a system to be a management system for the first system based on information about capabilities received in the replies;
- send a third message to the remaining systems that have not been selected, in which the first system requests to stop being managed by the not selected systems; and
the processing module is further adapted to send a second message to the selected system if a network resource model of the system changed, wherein said second message comprises information describing the changed requirements of said system.

9. The system (102) according to claim 8 comprising a discovery module (702) adapted to listen to incoming messages from other systems in said network and to forward an incoming message to the processing module (704) if said message is a request to be managed comprising information describing requirements of a system that sent said message or a notification of a change of network resource model of the system that sent said message, wherein said processing module (704) is adapted to process said message and generate a reply in response to said message, the reply including information about capabilities of the system (102).

## Patentansprüche

1. Verfahren zur Verwaltung der Integration eines Systems in ein Kommunikationsnetz, das eine Mehrzahl von Systemen umfasst, wobei das Verfahren die folgenden Schritte umfasst:
- Erzeugen einer ersten Nachricht durch ein erstes System, die eine Forderung des ersten Systems, verwaltet zu werden, und Informationen umfasst, welche Anforderungen des ersten Systems beschreiben;
- Senden der ersten Nachricht (202) an andere Systeme des Netzes;
- Warten (302, 304) durch das erste System für eine erste vordefinierte Zeitdauer auf den Empfang von Antworten von anderen Systemen im Netz;
- Empfangen mindestens einer Antwort (204) von mindestens einem der Systeme des Netzes in Reaktion auf die erste Nachricht, um zu bestätigen, dass das erste System durch das mindestens eine System, das die Antwort sendet, verwaltet wird, wobei die Antwort Informationen über Fähigkeiten des mindestens einen Systems enthält, das die Antwort sendet, wobei, wenn das erste System innerhalb der ersten vordefinierten Zeitdauer mehr als eine Antwort empfing (308), das Verfahren umfasst:
- Auswählen (312) durch das erste System eines Systems, das ein Verwaltungssystem für das erste System sein soll, basierend auf den empfangenen Antworten;
- Senden einer dritten Nachricht (314) an die restlichen Systeme, die nicht ausgewählt wurden, in welcher das erste System fordert, von den nicht ausgewählten Systemen nicht verwaltet zu werden; und
- Senden einer zweiten Nachricht (208) an das ausgewählte System, wenn sich ein Netzressourcenmodell des ersten Systems änderte (206), wobei die zweite Nachricht Informationen umfasst, welche geänderte Anforderungen des ersten Systems beschreiben.

2. Verfahren nach Anspruch 1, umfassend ein Wiederholen des Schrittes des Sendes der ersten Nachricht, wenn keine Antwort innerhalb der vordefinierten Zeitdauer empfangen wurde (306).

3. Verfahren nach Anspruch 1, wobei das Senden der ersten Nachricht intern innerhalb des ersten Systems durch Verbinden des ersten Systems mit dem Netz ausgelöst wird.

4. Verfahren nach einem der vorhergehenden Ansprüche, wobei das erste System an das Verwaltungssystem des ersten Systems Informationen in Bezug auf die laufende Verwaltung (1008 - 1012) von dem Typ sendet, der in den Fähigkeiten spezifiziert ist, die durch das erste System in der Antwortnachricht vom Verwaltungssystem empfangen werden.

5. Verfahren nach einem der vorhergehenden Ansprüche, wobei die Schritte des Sendens von Informationen über Fähigkeiten und/oder Anforderungen eines Systems ein Senden eines Metamodells umfassen, das vom Netzressourcenmodell des Systems erzeugt wird, das die Informationen sendet.

6. Verfahren nach einem der Ansprüche 1 - 4, wobei die Schritte des Sendens von Informationen über Fähigkeiten und/oder Anforderungen eines Systems ein Senden des Netzressourcenmodells des Systems umfassen, das die Informationen sendet.

7. Verfahren nach einem der vorhergehenden Ansprüche, wobei die Schritte des Sendens von Informationen über Fähigkeiten und/oder Anforderungen eines Systems ein Senden einer XML-Darstellung des Metamodells oder des Netzressourcenmodells umfassen.

8. System (102) zur Verwendung in einem Kommunikationsnetz (100), das ein Verarbeitungsmodul (704) umfasst, das ausgelegt ist zum:
- Erzeugen einer ersten Nachricht, die eine Forderung des Systems, verwaltet zu werden, und Informationen umfasst, welche Anforderungen des Systems beschreiben;
- Senden der ersten Nachricht an andere Systeme des Netzes;
wobei das System ferner einen ersten Zeitgeber zum Messen einer ersten vordefinierten Zeitdauer zum Warten auf Antworten von anderen Systemen im Netz umfasst, wobei das Verarbeitungsmodul ferner ausgelegt ist zum:
- Empfangen mindestens einer Antwort von mindestens einem der Systeme des Netzes in Reaktion auf die erste Nachricht, um zu bestätigen, dass das erste System durch das mindestens eine System, das die Antwort sendet, verwaltet wird, wobei die Antwort Informationen über Fähigkeiten des mindestens einen Systems enthält, das die Antwort sendet;
wobei das Verarbeitungsmodul so ausgelegt ist, dass es, wenn das erste System innerhalb der ersten Zeitdauer mehr als eine Antwort enthielt,
- ein System, das ein Veraltungssystem für das erste System sein soll, basierend auf Informationen über Fähigkeiten auswählt, die in den Antworten empfangen werden;
- eine dritte Nachricht an die restlichen Systeme sendet, die nicht ausgewählt wurden, in welcher das erste System fordert, von den nicht ausgewählten Systemen nicht verwaltet zu werden; und
das Verarbeitungsmodul ferner so ausgelegt ist, dass es eine zweite Nachricht an das ausgewählte System sendet, wenn sich ein Netzressourcenmodell des System änderte, wobei die zweite Nachricht Informationen umfasst, welche die geänderten Anforderungen des Systems beschreiben.

9. System (102) nach Anspruch 8, umfassend ein Erkennungsmodul (702), das so ausgelegt ist, dass es eingehende Nachrichten von anderen Systemen im Netz abhört und eine eingehende Nachricht an das Verarbeitungsmodul (704) weiterleitet, wenn die Nachricht eine Forderung, verwaltet zu werden, ist und Informationen, welche Anforderungen eines Systems beschreiben, das die Nachricht sandte, oder eine Benachrichtigung einer Änderung des Netzressourcenmodells des Systems umfasst, das die Nachricht sandte, wobei das Verarbeitungsmodul (704) so ausgelegt ist, dass es die Nachricht verarbeitet und in Reaktion auf die Nachricht eine Antwort erzeugt, wobei die Antwort Informationen über Fähigkeiten des System (102) umfasst.

## Revendications

1. Procédé de gestion d'intégration d'un système dans un réseau de communication comprenant une pluralité de systèmes, le procédé comprenant les étapes de :
- la génération d'un premier message par un premier système comprenant une demande dudit premier système à gérer et des informations décrivant des exigences dudit premier système ;
- l'envoi du premier message (202) à d'autres systèmes du réseau ;
- l'attente (302, 304) par le premier système pendant une première période prédéfinie de temps pour recevoir des réponses d'autres systèmes dans le réseau ;
- la réception d'au moins une réponse (204) provenant d'au moins l'un des systèmes du réseau en réponse au dit premier message pour confirmer que ledit premier message est géré par l'au moins un système envoyant ladite réponse, ladite réponse contenant des informations au sujet de capacités de l'au moins un système envoyant ladite réponse, dans lequel si ledit système a reçu, au cours de ladite première période prédéfinie de temps, plus d'une réponse (308), le procédé comprend :
- la sélection (312), par le premier système, d'un système destiné à être un système de gestion pour le premier système sur la base des réponses reçues ;
- l'envoi d'un troisième message (314) aux systèmes restants qui n'ont pas été sélectionnés, dans lequel le premier système demande d'arrêter d'être géré par les systèmes non sélectionnés ; et
- l'envoi d'un deuxième message (208) au dit système sélectionné, si un modèle de ressources de réseau du premier système a changé (206), dans lequel ledit deuxième message comprend des informations décrivant des exigences changées dudit premier système.

2. Procédé selon la revendication 1, comprenant la répétition de l'étape de l'envoi du premier message si aucune réponse n'a été reçue (306) à l'intérieur de ladite période prédéfinie de temps.

3. Procédé selon la revendication 1, dans lequel l'envoi du premier message est initié en interne à l'intérieur du premier système par la connexion du premier système au réseau.

4. Procédé selon l'une quelconque des revendications précédentes, dans lequel le premier système envoie, au système de gestion dudit premier système, des informations relatives à la gestion en cours (1008 - 1012) du type spécifié dans les capacités reçues par le premier système dans le message de réponse à partir du système de gestion.

5. Procédé selon l'une quelconque des revendications précédentes, dans lequel les étapes de l'envoi d'informations au sujet de capacités et/ou d'exigences d'un système comprennent l'envoi d'un méta-modèle généré à partir du modèle de ressources de réseau du système envoyant lesdites informations.

6. Procédé selon l'une quelconque des revendications 1 - 4, dans lequel les étapes de l'envoi d'informations au sujet de capacités et/ou d'exigences d'un système comprennent l'envoi du modèle de ressources de réseau du système envoyant lesdites informations.

7. Procédé selon l'une quelconque des revendications précédentes, dans lequel les étapes de l'envoi d'informations au sujet de capacités et/ou d'exigences d'un système comprennent l'envoi d'une représentation XML du méta-modèle ou du modèle de ressources de réseau.

8. Système (102) destiné à être utilisé dans un réseau de communication (100) comprenant un module de traitement (704) apte à effectuer :
- la génération d'un premier message comprenant une demande dudit système à gérer et des informations décrivant des exigences dudit système ;
- l'envoi dudit premier message à d'autres systèmes du réseau ;
le système comprenant en outre une première minuterie pour mesurer une première période prédéfinie de temps pour l'attente de réponses d'autres systèmes dans le réseau, dans lequel le module de traitement est en outre apte à effectuer :
- la réception d'au moins une réponse provenant d'au moins l'un des systèmes du réseau en réponse au dit premier message pour confirmer que ledit système est géré par l'au moins un système envoyant ladite réponse, ladite réponse contenant des informations au sujet de capacités de l'au moins un système envoyant ladite réponse ;
dans lequel le module de traitement, si ledit premier système a reçu, au cours de ladite première période prédéfinie de temps, plus d'une réponse, est en outre apte à effectuer :
- la sélection d'un système destiné à être un système de gestion pour le premier système sur la base d'informations au sujet de capacités reçues dans les réponses ;
- l'envoi d'un troisième message aux systèmes restants qui n'ont pas été sélectionnés, dans lequel le premier système demande d'arrêter d'être géré par les systèmes non sélectionnés ; et
le module de traitement est en outre apte à effectuer l'envoi d'un deuxième message au système sélectionné si un modèle de ressources de réseau du système a changé, dans lequel ledit deuxième message comprend des informations décrivant les exigences changées dudit système.

9. Système (102) selon la revendication 8, comprenant un module de découverte (702) apte à effectuer l'écoute de messages entrants provenant d'autres systèmes dans ledit réseau et le transfert d'un message entrant au module de traitement (704) si ledit message est une demande à gérer comprenant des informations décrivant des exigences d'un système ayant envoyé ledit message ou une notification d'un changement de modèle de ressources de réseau du système ayant envoyé ledit message, dans lequel ledit module de traitement (704) est apte à effectuer le traitement dudit message et la génération d'une réponse en réponse au dit message, la réponse comprenant des informations au sujet de capacités du système (102).
